# EUROPÄISCHE PATENTANMELDUNG

(11) **EP 0 858 969 A1**
(43) Veröffentlichungstag der Anmeldung: **19.08.1998**
(21) Anmeldenummer: 98102551.3
(22) Anmeldetag: 13.02.1998
(51) Int. Cl.: C01B 37/02

(54) **Lyotrope Flüssigkristallphasen amphiphiler Blockcopolymere als Template zur Herstellung mesoporöser Festkörper**

(30) Priorität: 13.02.1997 DE 19705497
(71) Anmelder: Max-Planck-Gesellschaft zur Förderung der Wissenschaften e.V., 80539 München (DE)
(72) Erfinder: Antonietti, Markus, 35043 Marburg (DE); Göltner, Christine, 36251 Bad Hersfeld (DE)
(74) Vertreter: Weiss, Wolfgang, Dipl.-Chem. Dr.

(57) **Zusammenfassung**

Die Erfindung betrifft ein Verfahren zur Herstellung mesoporöser Feststoffe unter Verwendung von amphiphilen Blockcopolymeren als Templaten.

## Beschreibung

Die Erfindung betrifft ein Verfahren zur Herstellung mesoporöser Feststoffe unter Verwendung von amphiphilen Blockcopolymeren als Templaten.

Mesoporöse organische Feststoffe mit Porendurchmessern zwischen 2 und 50 nm stellen eine wichtige Ergänzung zu kristallinen Zeolithen dar. Herkömmliche Verfahren zur Herstellung mesoporöser Kieselgele bedienen sich ionischer Tenside als strukturgebender Zusätze und gegebenenfalls inerter Öle als Quellungsmittel (US-Patente Nr. 5,057,296; 5,108,725; 5,098,684 und 5,102,643). Diese Verfahren sind jedoch mit Nachteilen behaftet. Zum einen gestaltet sich die Strukturkontrolle während der Prozessführung aufgrund von Phasenänderungen schwierig. Weiterhin wird die anorganische Nanostruktur bei Porengrößen von mehr als ca. 5 nm aufgrund ungenügender Wanddicken mechanisch instabil und kollabiert. Zum anderen ist die Oberfläche bislang bekannter mesoporöser Anorganika weitgehend unstrukturiert, da diese Materialien als feine Pulver mit kleinen Partikelgrößen erhalten werden.

Eine wesentliche Verbesserung dieses Verfahrens wurde mit der Sol-Gel-Synthese von mesoporösen Kieselgelen in den lyotropen Flüssigkristallphasen niedermolekularer, nichtionischer amphiphiler oberflächenaktiver Mittel erreicht (Attard et al., Nature 378 (1995), 366-367). Als Resultat einer auftretenden Mikrophasenentmischung und Strukturbildung auf der Nanometerskala wird bei diesem Verfahren die Polyreaktion einer anorganischen wasserlöslichen Ausgangskomponente, z. B. Kieselsäure, auf die hydrophilen Bereiche des Flüssigkristalls beschränkt, wodurch beim Erstarren des anorganischen Materials ein monolithischer Abdruck der Flüssigkristallstruktur entsteht. Im Gegensatz zu den zuvor beschriebenen Verfahren bildet sich nicht zwangsweise ein Pulver, sondern es sind auch makroskopische Körper wie z.B. poröse Schichten direkt zugänglich. Nachteile dieses Verfahrens sind jedoch, daß niedermolekulare Tenside nur zu beschränkten Porendurchmessern führen und daß hochreine niedermolekulare Tenside sehr teuer sind.

Eine Veröffentlichung von A. Bagshaw und J. Pinnavaia (Angew. Chem. 108 (1996), 1180-1183) beschreibt die Herstellung mesoporöser Molekularsiebe aus Aluminiumoxid unter Verwendung von Polyethylenoxid-Tensiden als Template. Die auf diese Weise erhaltenen mesoporösen Substanzen enthalten jedoch nur Poren, die keine erkennbare langreichweitige Ordnung aufweisen, da sie unter Bedingungen hergestellt werden, die nicht zur Bildung geordneter, lyotroper Flüssigkristallphasen führen. Diese ungeordnete Packung des Porensystems hat Nachteile dahingehend zur Folge, daß keine Möglichkeit zur Strukturkontrolle vorliegt und die Porengrößenverteilung nicht so eng sein kann wie bei Prozeßführung in einem Flüssigkristall.

Die der vorliegenden Erfindung zugrundeliegende Aufgabe bestand darin, ein Verfahren zur Herstellung mesoporöser organischer Feststoffe mit variablen Porendurchmessern bereitzustellen, bei dem die Nachteile des Standes der Technik mindestens teilweise ausgeräumt werden können.

Die vorliegende Erfindung beruht auf der Erkenntnis, daß bei Verwendung polymerer Flüssigkristallaggregate als Template zur Herstellung mesoporöser Materialien mechanisch stabile Nanostrukturen mit einer wohldefinierten und geordneten Struktur und großen und einheitlichen, durch das ganze Polymer einstellbaren Porendurchmessern zugänglich werden. Solche polymeren lyotrope Flüssigkristallphasen werden vorzugsweise von amphiphilen Blockcopolymeren gebildet, die aus mindestens zwei Blöcken unterschiedlicher Polarität bestehen, von denen einer wasserlöslich ist.

Die Strukturen der durch das erfindungsgemäße Verfahren erhaltenen Materialien sind regulär, d. h. sie weisen einen einheitlichen Symmetrietyp mit einheitlichen charakteristischen Längen auf und können mit Hilfe der Kleinwinkel-Röntgenstreuung oder bildgebend mit der Transmissionselektronenmikroskopie (TEM) beschrieben werden. Die durch das erfindungsgemäße Verfahren herstellbaren Materialien können beispielsweise hexagonale und lamellare Porenmorphologien sowie kubische und stäbchenförmige Strukturen aufweisen.

Neben der einheitlichen Porengröße und der hohen Stabilität liegen die Vorteile des vorgestellten Verfahrens in einer einfachen Funktionalisierung der anorganischen Grundstruktur durch gegebenenfalls während des Herstellungsprozesses anwesende oder/und danach eingelagerte weitere Komponenten. Darüber hinaus sind dem erfindungsgemäßen Verfahren nicht nur Keramik- oder Glasstrukturen, sondern auch Metalle zugänglich.

Spezifische Beispiele für die durch das erfindungsgemäße Verfahren hergestellten Materialien sind mesoporöse Kieselgele, die durch Kondensation von geeigneten Vorläufern, z. B. Siliciumalkoxiden, in der Flüssigkristallphase entstehen. Weitere Beispiele sind mesoporöse oxidische oder sulfidische Halbleiter und Keramiken, die durch oxidische bzw. sulfidische Fällung am Templat erhältlich sind. Schließlich sind mesoporöse Metalle durch Reduktion von Metallsalzen im bzw. am Templat zugänglich.

Ein weiterer Vorteil der Verwendung flüssigkristalliner Template zur Herstellung mesoporöser Materialien ist die Tatsache, daß Porengrößen erreicht werden können, die eine Beschichtung der inneren Porenwand durch eine nachfolgende chemische Reaktion am mesoporösen Träger mit katalytisch aktiven Spezies, z. B. Metalloxide, Metalle, Enzyme, ohne die Poren zu verstopfen, möglich machen.

Die Porengröße ist durch einfache Variation der Länge des Polymertemplats im Bereich von 2 bis 60 nm, vorzugsweise von 3 bis 50 nm einstellbar. Nach der Polymerisation kann das Templat entfernt werden, wobei eine mechanisch und thermisch stabile Nanostruktur entsteht.

Ein Gegenstand der vorliegenden Erfindung ist somit ein Verfahren zur Herstellung eines mesoporösen Feststoffes, umfassend die Schritte:
a) Bilden einer fluiden Mischung, umfassend mindestens ein Templat, welches in einer lyotropen Flüssigkristallphase vorliegt, und mindestens einen zu einem Feststoff reagierbaren Vorläufer,
b) Reagieren des Vorläufers,
c) gegebenenfalls Abtrennen flüchtiger Bestandteile vom Reaktionsgemisch und
d) Entfernen des Templats,
   welches dadurch gekennzeichnet ist, daß das Templat ein amphiphiles Polymer ist.

Der Vorläufer ist vorzugsweise ein anorganisches Monomer, welcher bei Reaktion z. B. durch Polymerisation einen Feststoff, z. B. ein Glas, eine Keramik oder ein Metall ergibt. Beispiele für Vorläufer, die durch Polymerisation in Gläser oder Keramiken übergeführt werden können, sind Metallalkoxide wie etwa Si(OR)₄, Al(OR)₃ und Ti(OR)₄ oder Mischungen davon, wobei R jeweils unabhängig einen geradkettigen oder verzweigten, gegebenenfalls substituierten C₁-C₈-Alkylrest darstellt. Vorzugsweise sind die gegebenenfalls vorhandenen Substituenten inert, d. h. sie nehmen unter den herrschenden Bedingungen nicht an der Reaktion der Vorläufer teil. Beispiele für Substituenten sind Halogen, OH etc. Besonders bevorzugt als Vorläufer sind Siliciumalkoxide wie etwa Tetramethoxysilan.

Weiterhin kann man beim erfindungsgemäßen Verfahren auch Vorläufer verwenden, die einen metallischen Feststoff ergeben.

Beispiele für geeignete metallbildende Vorläufer sind Metallverbindungen, die in Gegenwart des Templats eine mesoporöse metallische Struktur bilden können. Die Bildung dieser metallischen Strukur kann durch eine chemische Reaktion, z. B. Reduktion, oder durch andere Maßnahmen erfolgen. Bevorzugte Metallverbindungen sind Metallsalze oder/und Metallkomplexe, z. B. von Edelmetallen wie etwa Ru, Rh, Pd, Ag, Os, Ir, Pt, Au oder Mischungen davon. Ein spezifisches Beispiel für einen metallbildenden Vorläufer ist Ammoniumtetrachloroplatinat.

Die Reaktion des Vorläufers zum Feststoff kann auf unterschiedliche Art und Weise erfolgen. So kann das Feststoffgerüst beispielsweise durch Kondensation von Metallalkoxiden in der Flüssigkristallphase, durch oxidische oder sulfidische Fällung am Templat oder durch Reduktion von Metallsalzen am Templat gebildet werden. Zur Kondensation von Metallalkoxiden wird vorzugsweise ein saurer pH-Wert im fluiden Medium eingestellt. Die Reduktion von Metallsalzen kann durch Zugabe eines geeigneten Reduktionsmittels wie etwa Hydrazin erfolgen.

Das fluide Medium wird im erfindungsgemäßen Verfahren so gewählt, daß das amphiphile Polymer eine lyotrope Flüssigkristallphase bilden kann. Die Bildung dieser Flüssigkristallphase kann durch Bestimmung der Viskositäts- und Doppelbrechungseigenschaften ermittelt werden. Nachdem sich die Flüssigkristallphase gebildet hat, wird die Mischung solchen Bedingungen ausgesetzt, daß eine Reaktion des Vorläufers stattfindet. Hierzu kann ein geeigneter Katalysator zugesetzt werden.

Durch das erfindungsgemäße Verfahren wird die Herstellung vom mesoporösen Feststoffen mit variabler Zusammensetzung ermöglicht. So können Gemische von Vorläufersubstanzen verwendet werden. Auf diese Weise können Feststoffgerüste erzeugt werden, welche mehr als eine Komponente enthalten.

Hierzu können Gemische von Metallalkoxidmonomeren wie etwa Si(OR)₄ und Al(OR)₃ verwendet werden. Weiterhin kann ein Metallalkoxid, z. B. Si(OR)₄ zusammen mit einem Comonomer polymerisiert werden, das ausgewählt ist aus einem Metallsalz, z.B. einem Aluminium- oder Vanadiumsalz, einer metallorganischen Verbindung oder einem funktionalisierten Orthosilikat R-Si(OR)₃ wobei R=Alkyl, ein funktionalisiertes Alkyl, ein Halogen wie etwa Cl, Br oder F, oder CN. Beispiele für funktionalisierte Alkylreste sind Epoxid- oder Aminogruppen tragende Alkylreste. Die Einführung der Alkylgruppe dient zur Hydrophobisierung des Feststoffs, die Einführung von CN z. B. zur Immobilisierung von Metallkolloiden und die Einführung funktionalisierter Alkylreste zur späteren chemischen oder physikalischen Kupplung weiterer Substanzen, z. B. biologischer Substanzen wie etwa Antikörper.

Noch eine weitere Möglichkeit der Modifizierung besteht darin, die Reaktion der Vorläufer in Gegenwart inerter, d. h. nicht unter den im fluiden Medium herrschenden Bedingungen reagierenden Sustanzen durchzuführen, so daß diese in die Poren der Feststoffstruktur bei der Synthese eingebaut werden. Beispiele für inerte Substanzen sind Biomoleküle, z. B. Proteine wie Enzyme, oder Metallkolloide.

Auch nach der Reaktion können die Poren des Feststoffes auf unterschiedliche Art und Weise modifiziert werden. So können die Poren durch eine Präzipitation oder/und Sol-Gel-Synthese beschichtet werden. Dies kann beispielsweise durch Fällung eines Metallsalzes auf der Feststoffoberfläche, Präzipitation von Edelmetallen aus der Gasphase oder durch chemische Reduktion eines geeigneten Metallsalzes auf der Oberfläche, Hydrolysieren und Polykondensieren von Metallalkoxiden in den Poren der Nanostruktur erreicht werden. Auch organische Substanzen können an die Oberfläche der Poren adsorptiv oder durch kovalente Kupplung immobilisiert werden.

Weiterhin kann der Feststoff nach der Reaktion durch Austausch von Gerüstbausteinen modifiziert werden. Hierzu können Fremdatome in die Oberfläche des Silikatgrundgerüsts durch Austausch mit Fremdionen, z. B. AlO₄⁻ statt SiO₄ eingebaut werden. Dieser Austausch kann z. B. durch Kontaktieren eines SiO₄ Grundgerüsts mit einer Metallsalzlösung erfolgen.

Ein wesentliches Merkmal des erfindungsgemäßen Verfahrens ist die Verwendung von amphiphilen Polymeren als Templat zur Erzeugung einer lyotropen Flüssigkristallphase. Vorzugsweise ist das Templat ein amphiphiles Blockcopolymer, vorzugsweise mit der Struktur Aₙ-Cₘ-Bₙ, Aₙ-Cₘ-Bₙ-Cₘ-Aₙ oder Bₙ-Cₘ-Aₙ-Cₘ-Bₙ , wobei A eine hydrophobe Struktureinheit ist, B eine hydrophile Struktureinheit ist, C eine nieder- oder hochmolekulare, hydrophobe oder hydrophile Struktureinheit ist, n bei jedem Vorkommen unabhängig voneinander eine ganze Zahl von 5 bis 500 ist und m bei jedem Vorkommen unabhängig voneinander eine ganze Zahl von 0 bis 20 ist.

Die Bausteine A der hydrophoben Blöcke werden vorzugsweise jeweils unabhängig ausgewählt aus geradkettigen oder verzweigten, einfach oder mehrfach ungesättigten C₄-C₈- und insbesondere C₄-C₅-Olefinen, z. B. Butadien oder Isopren, Styrol und hydrophob substituierten Styrolen wie etwa Alkyl- oder Halogenstyrolen und hydrophoben Alkylacrylaten, Alkylmethacrylaten und Dialkylsiloxanen. Die Bausteine B der hydrophilen Blöcke werden vorzugsweise jeweils unabhängig ausgewählt aus Ethylenoxid, Vinylalkoholen, Vinylaminen, Vinylpyridinen, Acrylsäure, Methacrylsäure, hydrophilen Acrylsäureestern und -amiden und Methacrylsäureestern und -amiden und Styrolsulfonsäuren. Die fakultativ anwesenden Blöcke Cₘ dienen zur Verbrückung der hydrophilen und hydrophoben Blöcke A und B und können zur Vereinfachung der Synthese oder/und zur Modifizierung der Phasenstruktur eingeführt werden. Die Bausteine C werden vorzugsweise unabhängig ausgewählt aus Bausteinen wie für A und B definiert. Besonders bevorzugt ist jeder Strukturblock Cₘ unabhängig bei jedem Vorkommen ein hydrophobes oder ein hydrophiles Polymer.

Weiterhin ist bevorzugt, daß Aₙ, Bₙ und Cₘ jeweils Blöcke sind, die bei jedem Vorkommen unabhängig aus einer einzigen Spezies aus einer Struktureinheit bestehen. Besonders bevorzugt sind Aₙ und Bₙ Homopolymere.

Die Herstellung von Blockcopolymeren, die als Templat für das erfindungsgemäße Verfahren geeignet sind, kann durch lebende anionische, kationische, radikalische und Gruppentransferpolymerisation erfolgen. Besonders bevorzugt erfolgt die Herstellung nach einem kombinierten Verfahren, welches in DE-PS 41 34 967 beschrieben ist. Spezifische Beispiele von Produkten, die durch dieses Verfahren hergestellt werden, sind die von der Firma Goldschmidt vertriebenen Polymere SE 10/10 und SE 30/30 (Styrol-Ethylenoxid-Blockcopolymere mit Molekulargewichten der jeweiligen Blöcke von 1000 bzw. 3000).

Schritt (c) des erfindungsgemäßen Verfahrens umfaßt das Entfernen flüchtiger Bestandteile vom Reaktionsgemisch. Dieser Schritt kann vor oder/und nach der Reaktion des Vorläufers zum Feststoff erfolgen. Solche flüchtigen Bestandteile sind üblicherweise das fluide Medium und gegebenenfalls weitere in der Mischung enthaltene Komponenten sowie die gegebenenfalls entstehenden flüchtigen Reaktionsprodukte, z. B. der bei der Hydrolyse von Metalloxiden freiwerdende Alkohol (R-OH). Dieses Entfernen von flüchtigen Bestandteilen erfolgt vorzugsweise durch Anlegen von Vakuum gegebenenfalls unter Erwärmen.

Schritt (d) des erfindungsgemäßen Verfahrens beinhaltet die Entfernung des Templats und gegebenenfalls von nichtflüchtigen Reaktionsprodukten. Dieser Schritt erfolgt vorzugsweise durch Calcinieren, d. h. durch Erwärmen auf erhöhte Temperaturen, oder/und durch Extraktion. Das Calcinieren erfolgt vorzugsweise durch Erhitzen zunächst in einer inerten Atmosphäre und dann in Gegenwart von Sauerstoff. Die Temperatur beim Calcinieren richtet sich nach der Hitzebeständigkeit der Komponenten des Feststoffs. Für Silikagel-Feststoffe haben sich Calcinierungstemperaturen von 450-500°C als geeignet erwiesen. Die Extraktion kann mit Wasser, organischen Lösungsmitteln wie etwa Aceton oder einem Gemisch davon auf übliche Weise durchgeführt werden. Bevorzugt ist eine Kombination von Extraktion und Calcinieren.

Noch ein weiterer Gegenstand der vorliegenden Erfindung ist ein mesoporöser Feststoff, erhältlich durch ein Verfahren wie zuvor angegeben. Der Porendurchmesser des Feststoffs kann über einen Bereich von 2 bis 60 nm variiert werden. Besonders bevorzugt liegt der Porendurchmesser im Bereich zwischen 3 und 50 nm. Der mittlere Durchmesser der durch das erfindungsgemäße Verfahren erhältlichen Teilchen liegt vorzugsweise im Bereich von 0,1 - 20 mm, besonders bevorzugt im Bereich von 1 - 10 mm. Weiterhin können - wie aus den Beispielen ersichtlich ist - die erfindungsgemäßen Feststoffe doppelbrechende optische Eigenschaften aufweisen.

Der erfindungsgemäße Feststoff hat eine charakteristische Periodizität, die im allgemeinen ≥ 5 nm ist. Besonders bevorzugt die Periodizität im Bereich von 5 bis 25 nm. Die erfindungsgemäßen Feststoffe können beispielsweise eine hexagonale oder lamellare Nanostruktur haben. Der Feststoff kann auch eine kubische Struktur aufweisen. Vorzugsweise wird die Oberflächenordnung oder/und -struktur der Feststoffe im wesentlichen durch das Porensystem bestimmt.

Die erfindungsgemäßen mesoporösen Feststoffe können für eine Vielzahl von Anwendungen eingesetzt werden. Beispiele sind chromatographische Anwendungen, in der Trenntechnik, bei der heterogenen Katalyse, in der Sensorik, sowie in optischen und elektronischen Elementen.

Weiterhin wird die Erfindung durch die nachfolgenden Abbildungen und Beispiele verdeutlicht.

Es zeigen:
- Abb. 1: ein Röntgen-Kleinwinkeldiffraktogramm eines erfindungsgemäßen mesoporösen Kieselgels (Beispiel 1);
- Abb. 2: eine transmissionselektronenmikroskopische Aufnahme des Kieselgels gemäß Abb. 1;
- Abb. 3: ein Röntgen-Kleinwinkeldiffraktogramm eines weiteren erfindungsgemäßen mesoporösen Kieslegels (Beispiel 2) und
- Abb. 4: eine transmissionselektronenmikroskopische Aufnahme des Kieselgels gemäß Abb. 3.

### Beispiele:

### Beispiel 1:

### Mesoporöses Kieselgel an SE 30/30

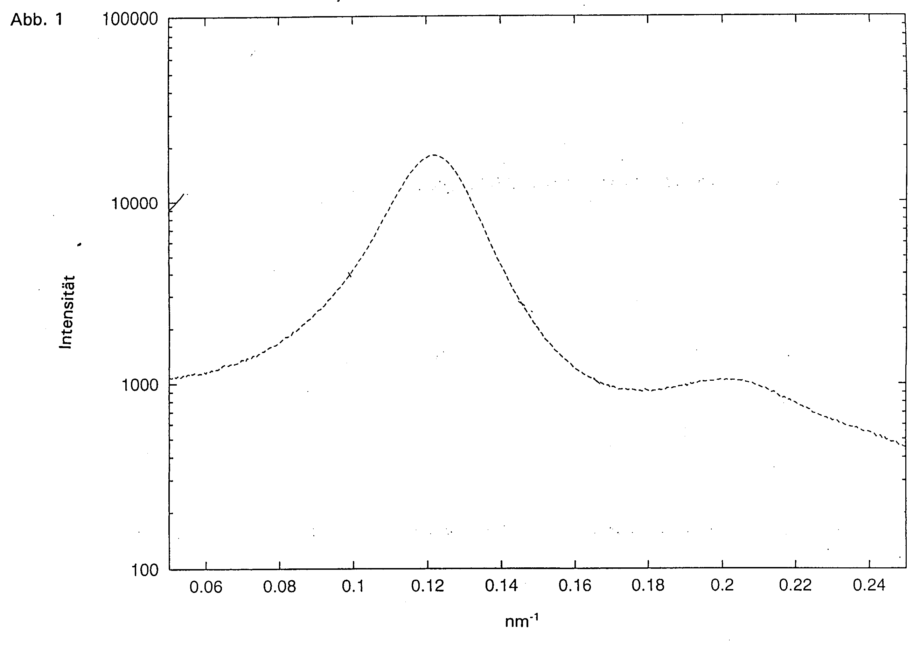

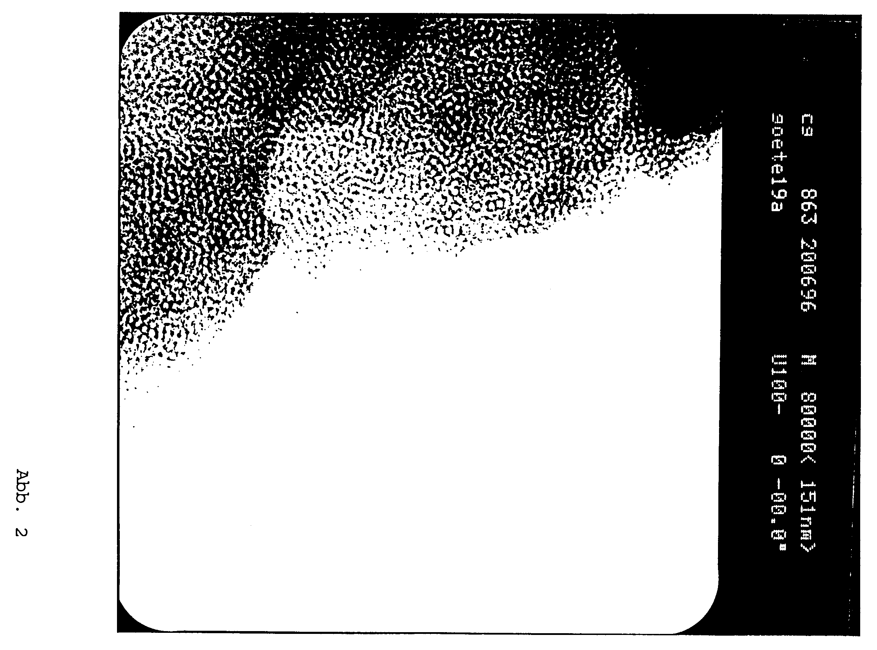

2000 mg SE 30/30 werden unter leichtem Erwärmen in 4000 mg Tetramethoxysilan gelöst. Zu dieser Mischung werden 2000 mg verd. Salzsäure (pH 2) gegeben, und nach Abklingen der exothermen Reaktion wird das Reaktionsgemisch evakuiert, um das bei der Hydrolyse gebildete Methanol zu entfernen. Sobald das Reaktionsgemisch viskos und doppelbrechend ist, wird das offene Reaktionsgefäß für 12 h bei 50°C gelagert, worauf die Mischung zu einem harten Glas erstarrt. Dieses wird für 12 h einer kontinuierlichen Extraktion mit Aceton unterzogen und anschließend bei 450-500 °C calciniert (6 h unter Stickstoff, 6 h unter Sauerstoff). Man erhält ein Material, dessen Nanostruktur eine charakteristische Periodizität von 13 nm aufweist (Abb. 1). Ein typisches TEM-Bild ist in Abb. 2 gezeigt, wobei M den Vergrößerungsfaktor darstellt.

### Beispiel 2:

### Mesoporöses Alumosilikat an SE 10/10

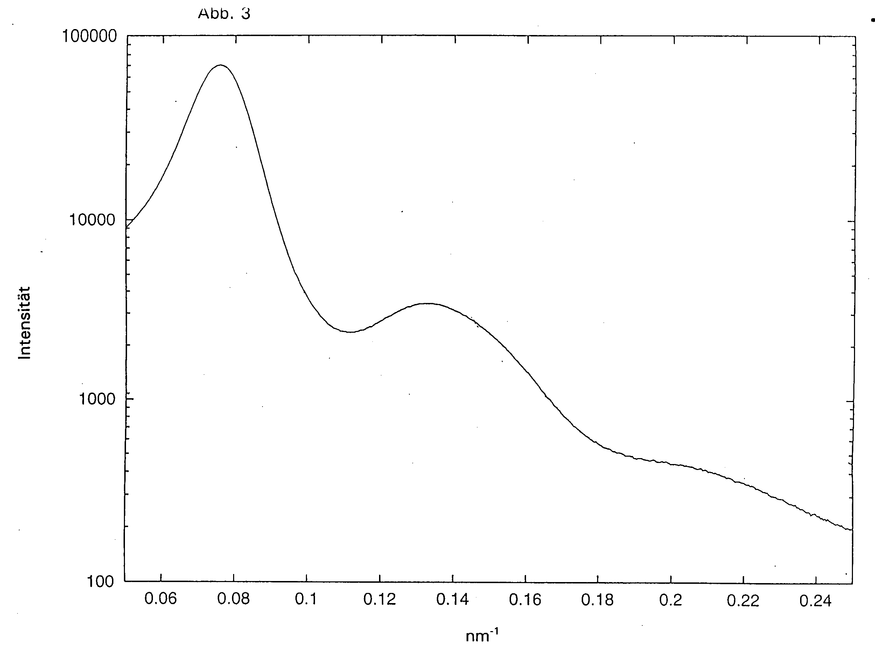

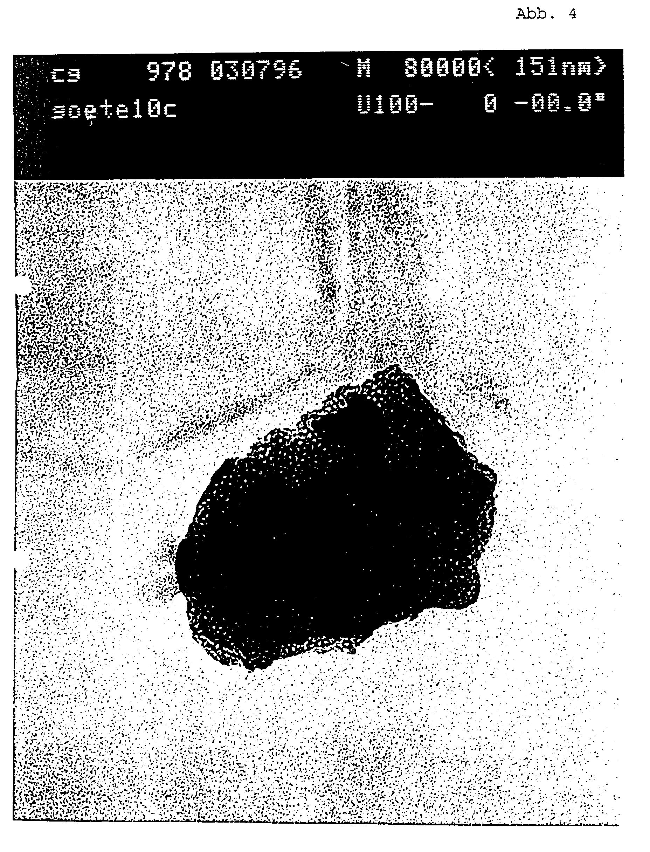

2000 mg SE 10/10 werden unter leichtem Erwärmen in 3000 mg Tetramethoxysilan gelöst. Zu dieser Mischung wird eine Lösung aus 500 mg Aluminiumchlorid-Hydrat in 2500 mg Wasser gegeben und nach Abklingen der exothermen Reaktion wird das Reaktionsgemisch evakuiert, um das bei der Hydrolyse gebildete Methanol zu entfernen. Sobald das Reaktionsgemisch viskos und doppelbrechend ist, wird das offene Reaktionsgefäß für 12 h bei 50°C gelagert, worauf die Mischung zu einem harten Glas erstarrt. Dieses wird für 12 h einer kontinuierlichen Extraktion mit Aceton unterzogen und anschließend bei 450-500°C calciniert (6 h unter Stickstoff, 6 h unter Sauerstoff). Man erhält ein Material, dessen Nanostruktur eine charakteristische Periodizität von 8 nm aufweist (Abb. 3). Ein typisches TEM-Bild ist in Abb. 4 gezeigt.

### Beispiel 3:

### Mesoporöses Platin an SE 10/10

200 mg Ammoniumtetrachloroplatinat werden in 100 mg Wasser gelöst und mit 1000 g SE 10/10 gemischt. Unabhängig davon werden 46 mg Hydrazin in 600 mg Wasser gelöst und mit 600 mg SE 10/10 gemischt. Mischungen werden auf zwei Glasplatten aufgetragen und durch Aufeinanderpressen der Platten miteinander in Kontakt gebracht. Nach ca. 10 h wird das Reaktionsprodukt wiederholt mit Aceton und Wasser extrahiert.

## Patentansprüche

1. Verfahren zur Herstellung eines mesoporösen Feststoffes, umfassend die Schritte:
(a) Bilden einer fluiden Mischung, umfassend mindestens ein Templat, welches in einer lyotropen Flüssigkristallphase vorliegt, und mindestens einen zu einem Feststoff reagierbaren Vorläufer,
(b) Reagieren des Vorläufers,
(c) gegebenenfalls Entfernen flüchtiger Bestandteile vom Reaktionsgemisch und
(d) Entfernen des Templats,
**dadurch gekennzeichnet**,
dass das Templat ein amphiphiles Polymer ist.

2. Verfahren nach Anspruch 1,
**dadurch gekennzeichnet**,
dass der Vorläufer aus Si(OR)₄, Al(OR)₃, Ti(OR)₄ oder Mischungen davon ausgewählt ist, wobei R jeweils unabhängig einen geradkettigen oder verzweigten ggf. inert substituierten C₁-C₈-Alkylrest darstellt.

3. Verfahren nach Anspruch 1,
**dadurch gekennzeichnet**,
daß der Vorläufer aus Metallverbindungen ausgewählt ist, die in Gegenwart des Templats eine mesoporöse metallische Struktur bilden können.

4. Verfahren nach einem der vorhergehenden Ansprüche,
**dadurch gekennzeichnet**,
dass das Templat ein amphiphiles Copolymer mit der Struktur Aₙ-Cₘ-Bₙ, Aₙ-Cₘ-Bₙ-Cₘ-Aₙ oder Bₙ-Cₘ-Aₙ-Cₘ-Bₙ ist, wobei A eine hydrophobe Struktureinheit ist, B eine hydrophile Struktureinheit ist, C eine hydrophobe oder hydrophile Struktureinheit ist, n bei jedem Vorkommen unabhängig voneinander eine ganze Zahl von 5 bis 500 ist und m bei jedem Vorkommen unabhängig voneinander eine ganze Zahl von 0 bis 20 ist.

5. Verfahren nach Anspruch 4,
**dadurch gekennzeichnet**,
dass jedes A unabhängig ausgewählt wird aus C₄-C₈-Olefinen, Styrol und hydrophob substituierten Styrolen, hydrophoben Alkylacrylaten, hydrophoben Alkylmethacrylaten und hydrophobe Dialkylsiloxanen, jedes B unabhängig ausgewählt wird aus Ethylenoxid, Vinylalkoholen, Vinylaminen, Vinylpyridinen, Acrylsäure, Methacrylsäure, hydrophilen Acrylsäureestern und -amiden und Methacrylsäureestern und -amiden und Styrolsulfonsäuren und jedes C unabhängig ausgewählt wird aus einer Struktureinheit wie für A und B definiert.

6. Verfahren nach Anspruch 5,
**dadurch gekennzeichnet**,
dass jedes Cₘ unabhängig bei jedem Vorkommen ein hydrophobes oder ein hydrophiles Polymer ist.

7. Verfahren nach Anspruch 5 und Anspruch 6,
**dadurch gekennzeichnet**,
dass Aₙ, Bₙ und Cₘ Blockcopolymere sind, bestehend bei jedem Vorkommen unabhängig aus einer einzigen Spezies einer Struktureinheit.

8. Verfahren nach einem der vorhergehenden Ansprüche,
**dadurch gekennzeichnet**,
dass ein die Reaktion des Vorläufers beschleunigender Katalysator zugegeben wird.

9. Verfahren nach einem der vorhergehenden Ansprüche,
**dadurch gekennzeichnet**,
dass Schritt (d) ein Calcinieren oder/und eine Extraktion beinhaltet.

10. Verfahren nach einem der vorhergehenden Ansprüche,
**dadurch gekennzeichnet**,
daß man für die Reaktion ein Gemisch von Vorläufersubstanzen verwendet.

11. Verfahren nach einem der vorhergehenden Ansprüche,
**dadurch gekennzeichnet**,
daß man die Reaktion in Gegenwart inerter Substanzen durchführt, die in die Poren des Feststoffs eingebaut werden.

12. Verfahren nach einem der vorhergehenden Ansprüche,
**dadurch gekennzeichnet**,
dass man nach der Reaktion die Oberfläche des Feststoffs beschichtet.

13. Verfahren nach einem der vorhergehenden Ansprüche,
**dadurch gekennzeichnet**,
daß man nach der Reaktion den Feststoff durch Austausch von Gerüstbausteinen modifiziert.

14. Mesoporöser Feststoff, erhältlich durch ein Verfahren nach einem der Ansprüche 1 bis 13.

15. Feststoff nach Anspruch 14 mit einem Porendurchmesser in einem Bereich von 2 bis 60 nm.

16. Feststoff nach Anspruch 14 oder 15,
**dadurch gekennzeichnet**,
dass er eine Periodizität von ≥ 5 nm aufweist.

17. Verwendung des Feststoffes nach einem der Ansprüche 14 bis 16 in der Trenntechnik.

18. Verwendung des Feststoffs nach einem der Ansprüche 14 bis 16 bei der heterogenen Katalyse.

19. Verwendung des Feststoffs nach einem der Ansprüche 14 bis 16 in der Sensorik.

20. Verwendung des Feststoffs nach einem der Ansprüche 14 bis 16 in optischen oder elektronischen Elementen.
